# EUROPEAN PATENT SPECIFICATION

(11) **EP 2 889 593 B1**
(45) Date of publication and mention of the grant of the patent: **17.03.2021**
(21) Application number: 14191685.8
(22) Date of filing: 04.11.2014
(51) Int. Cl.: G01H 1/00, F16H 61/4183, F04B 1/04, F04B 9/04, F04B 51/00, F03C 1/053, F03D 17/00, F03D 15/00, F03D 9/28

(54) **Diagnosis method and diagnosis apparatus for hydraulic machine**
Diagnoseverfahren und Diagnosevorrichtung für Hydraulikmaschine
Appareil de diagnostic et procédé de diagnostic pour machine hydraulique

(30) Priority: 27.12.2013 JP 2013272840
(43) Date of publication of application: 01.07.2015
(73) Proprietor: MITSUBISHI HEAVY INDUSTRIES, LTD., Tokyo 108-8215 (JP)
(72) Inventor: Ohira, Takeo, TOKYO, 108-8215 (JP); Hayashi, Kentaro, TOKYO, 108-8215 (JP)
(74) Representative: Cabinet Beau de Loménie

(56) References cited:
- WO-A1-2008/048385
- JP-A- 2010 112 918
- US-A- 5 610 339
- US-A- 5 992 237
- US-A1- 2004 050 163
- US-A1- 2008 234 964

## Description

### TECHNICAL FIELD

The present disclosure relates to a diagnosis method and a diagnosis apparatus for a hydraulic machine.

### BACKGROUND

As a diagnosis apparatus for a hydraulic machine, there has been known an apparatus which diagnoses breakdown of a negative pressure machine from the outside of a hydraulic machine without inserting a measuring gauge into a hydraulic line. For instance, Patent Document 1 discloses a breakdown diagnosis apparatus which has means for obtaining data related to vibration and temperature of an outer casing of a hydraulic machine by a vibration detector and a temperature detector and for calculating the level of damage for each constituent member from the obtained data related to vibration and temperature. Patent Document 2 relates to variable valve timing performance detection for an internal combustion engine.

### Citation List

### Patent Literature

Patent Document 1: JPS60-122351A
Patent Document 2: WO 2008/048385 A1

### SUMMARY

A hydraulic machine such as a hydraulic pump and a hydraulic motor normally include pistons which reciprocate periodically in cylinders in accordance with rotation of a rotational shaft. When the rotation speed of the rotational shaft increases, a so-called piston jump phenomenon may occur, in which a piston rises off the contacting surface between the piston and the rotational shaft side (for instance, a cam that rotates with the rotational shaft) and then the piston and the rotational shaft side collide with each other when the piston subsequently contacts the rotational shaft side. When the piston jump phenomenon occurs, the pistons, the cam, or the like may get damaged by the collision. This piston jump phenomenon may also occur in a hydraulic machine without a substantial deterioration phenomenon having taken place.

Therefore, while the breakdown diagnosis apparatus described in Patent Document 1 may be able to detect occurrence of a substantial deterioration phenomenon (abrasion of a spline shaft or damage to a piston ring) described above, it is difficult to detect the piston jump phenomenon, which is not necessarily accompanied by a substantial deterioration phenomenon.

An object of at least one embodiment of the present invention is to provide a diagnosis method and a diagnosis apparatus for a hydraulic machine, which are capable of detecting the piston jump phenomenon from the outside of the hydraulic machine.

A diagnosis method for a hydraulic machine according to the present invention is for a hydraulic machine including a rotational shaft, a plurality of cylinders, a plurality of pistons each configured to be guided by each of the plurality of cylinders to reciprocate in relation to rotation of the rotational shaft, and a casing for accommodating the cylinders and pistons. The diagnosis method as defined in claim 1, includes among others: a vibration detection step of detecting vibration of the casing by a vibration sensor disposed on the casing while rotating the rotational shaft in an unloaded state of the hydraulic machine; and a determination step of determining, on the basis of a detection result detected by the vibration sensor, whether a piston jump phenomenon which is accompanied by collision and separation of at least one of the pistons with respect to a rotational shaft side has occurred.

Vibration due to the piston jump phenomenon is caused by collision between one of the pistons and the rotational shaft side. Thus, it may be considered that this phenomenon normally cannot be detected from outside of the casing even though it can be detected from the pistons or the rotational shaft side.

Under such circumstances, the present inventors unexpectedly found that it is possible to detect vibration due to the piston jump phenomenon by measuring vibration with a vibration sensor disposed on the casing side while rotating the rotational shaft in an unloaded state of a hydraulic machine, as a result of their extensive researches.

As the vibration due to collision between the rotational shaft and a piston transmits from the rotational shaft to the casing via a mechanical element (a bearing, for instance) included in the hydraulic machine, it may be considered that the vibration can be detected also at the casing side. Further, by operating the hydraulic machine in an unloaded state, it becomes possible to prevent vibration due to causes other than the piston jump phenomenon in the hydraulic machine, which enables specifically detecting vibration due to the piston jump phenomenon using a vibration sensor.

Accordingly, the above diagnosis method for a hydraulic machine makes it possible to detect vibration due to the piston jump phenomenon from the outside of a hydraulic machine.

Here, since the above described diagnosis method for a hydraulic machine includes detecting vibration of the casing by the vibration sensor disposed on the casing and then determining occurrence of the piston jump phenomenon on the basis of the detection result, it is possible to detect the piston jump phenomenon without directly measuring the pressure inside cylinders. Accordingly, it is possible to detect the piston jump phenomenon from the outside of the hydraulic machine using the vibration sensor disposed on the casing without providing a pressure sensor for each cylinder.

In the invention, the vibration sensor is at least one acceleration meter mounted on the casing. Also, in the vibration detection step, a waveform which indicates temporal change of acceleration of the casing is obtained by the at least one acceleration meter, and, in the determination step, the piston jump phenomenon is determined to have occurred if a peak-to-rms ratio of a peak included in the waveform is at least a predetermined threshold value.

In this case, by using an acceleration meter, it is possible to determine the temporal change of the vibration as temporal change of acceleration. Here, an occurrence of the shock due to collision between a piston and the rotational shaft side appears as a peak in the waveform obtained by the acceleration meter. Thus, as described above, it is possible to detect the piston jump phenomenon by comparing the peak-to-rms ratio of the peak in the waveform obtained by the acceleration meter with a threshold value.

In some embodiments, the diagnosis method for a hydraulic machine further includes an abnormal-piston determination step of determining an abnormal piston where the piston jump phenomenon has occurred. Also, in the abnormal-piston determination step, a piston which has reached a bottom dead center at a time when the peak indicating occurrence of the piston jump phenomenon has appeared is determined as the abnormal piston.

The piston jump phenomenon takes place when a piston is positioned in the vicinity of the bottom dead center and get closest to the rotational shaft side. Thus, if a piston reaches its bottom dead center at the time when a peak indicating occurrence of the piston jump phenomenon appears, this piston can be estimated to be the abnormal piston where the piston jump phenomenon exactly has taken place. Thus, by determining a piston which has reached its bottom dead center at the time when a peak indicating occurrence of the piston jump phenomenon appears, it is possible to determine in which piston the piston jump phenomenon has occurred from among the plurality of pistons included in the hydraulic machine.

In some embodiments, the diagnosis method further includes a data acquisition step of acquiring data which indicates temporal change of a rotation angle of the rotational shaft. In the abnormal-piston determination step, the piston that has reached the bottom dead center at the time when the peak appears is determined from the data indicating the temporal change of the rotation angle of the rotational shaft acquired in the data acquisition step.

As the rotational angle of the rotational shaft and the time when each piston reaches its bottom dead center correlate with each other, they can be associated with each other. In this case, from a rotation angle of the rotational shaft at the time when a peak appears in the waveform indicating temporal change of acceleration, it is possible to determine a piston which has reached its bottom dead center at this time, using data which indicates the temporal change in the rotation angle of the rotational shaft. Accordingly, it is possible to determine in which piston the piston jump phenomenon has occurred from among the plurality of pistons included in the hydraulic machine.

In some embodiments, the hydraulic machine is a hydraulic motor of a hydraulic transmission which includes: a hydraulic pump which is configured to be driven by mechanical energy inputted to a rotational shaft; and the hydraulic motor, which is configured to be driven by pressurized oil from the hydraulic pump.

In this case, as vibration due to collision between the rotational shaft and a piston transmits from the rotational shaft to the casing via a mechanical element included in the hydraulic motor (a bearing, for instance), it may be considered that the vibration can be detected at the casing side. Further, by bringing the hydraulic motor into an unloaded state, it is possible to prevent vibration due to causes other than the piston jump phenomenon in the hydraulic motor, which enables specifically detecting vibration due to the piston jump phenomenon using a vibration sensor.

Accordingly, the above diagnosis method for a hydraulic machine makes it possible to detect vibration due to the piston jump phenomenon from the outside of the hydraulic motor.

In some embodiments, the hydraulic transmission is a power transmitting part of a renewable energy power generating apparatus which includes: at least one blade; a rotational shaft configured to rotate by renewable energy received by the at least one blade; the power transmitting part, to which rotation energy of the rotational shaft is inputted, and a generator configured to be driven by the rotation energy inputted via the power transmitting part.

In this case, as vibration due to collision between the rotational shaft and a piston transmits from the rotational shaft to the casing via a mechanical element included in the hydraulic motor (a bearing, for instance), it may be considered that the vibration can be detected at the casing side. Further, by bringing the hydraulic motor into an unloaded state, it is possible to prevent vibration due to causes other than the piston jump phenomenon in the hydraulic motor, which enables specifically detecting vibration due to the piston jump phenomenon using a vibration sensor.

Accordingly, the above diagnosis method for a hydraulic machine makes it possible to detect vibration due to the piston jump phenomenon from the outside of the hydraulic motor.

A diagnosis apparatus according to the present invention is for a hydraulic machine which includes a rotational shaft, a plurality of cylinders, a plurality of pistons each of which is configured to be guided by each of the plurality of cylinders to reciprocate in relation to rotation of the rotational shaft, and a casing for accommodating the cylinders and pistons. The diagnosis apparatus as defined in claim 7, includes among others: a vibration sensor which is disposed on the casing and configured to detect vibration of the casing which occurs during rotation of the rotational shaft in an unloaded state of the hydraulic machine; and a determination part configured to determine, on the basis of a detection result detected by the vibration sensor, whether a piston jump phenomenon has occurred, the piston jump phenomenon being accompanied by collision and separation of at least one of the pistons with respect to a rotational shaft side.

As vibration due to collision between the rotational shaft and a piston transmits from the rotational shaft to the casing via a mechanical element included in the hydraulic machine (a bearing, for instance), it may be considered that the vibration can be detected at the casing side. Further, by bringing the hydraulic machine into an unloaded state, it is possible to prevent vibration due to causes other than the piston jump phenomenon in the hydraulic machine, which enables specifically detecting vibration due to the piston jump phenomenon using a vibration sensor.

Accordingly, the above diagnosis apparatus for a hydraulic machine makes it possible to detect vibration due to the piston jump phenomenon from the outside of the hydraulic machine.

Here, in the above described diagnosis apparatus for a hydraulic machine, since vibration of the casing is detected by the vibration sensor disposed on the casing and then occurrence of the piston jump phenomenon is determined on the basis of the detection result, it is possible to detect the piston jump phenomenon without directly measuring pressure in a cylinder. Accordingly, it is possible to detect the piston jump phenomenon from the outside of the hydraulic machine using the vibration sensor disposed on the casing without providing a pressure sensor for each cylinder.

In the vibration sensor is at least one acceleration meter which is mounted on the casing and configured to obtain a waveform which indicates temporal change of acceleration of the casing. Also, the determination part is configured to determine that the piston jump phenomenon has occurred if a peak-to-rms ratio of a peak included in the waveform is at least a threshold value.

In this case, by using an acceleration meter, it is possible to determine the temporal change of the vibration as temporal change of acceleration. Here, an occurrence of the shock due to collision between a piston and the rotational shaft side appears as a peak in the waveform obtained by the acceleration meter. Thus, since occurrence of the piston jump phenomenon is determined from the peak-to-rms ratio of a peak included in the waveform, it is possible to detect the piston jump phenomenon by detecting a peak in the waveform of acceleration if a threshold of the peak-to-rms ratio is set in advance.

In some embodiments, the diagnosis apparatus further includes an abnormal-piston determination part configured to determine an abnormal piston where the piston jump phenomenon has occurred. Also, the abnormal-piston determination part is configured to determine a piston that has reached a bottom dead center at a time when the peak indicating occurrence of the piston jump phenomenon has appeared as the abnormal piston.

The piston jump phenomenon takes place when a piston is positioned in the vicinity of the bottom dead center and gets closest to the rotational shaft side. Thus, if a piston reaches its bottom dead center at the time when a peak indicating occurrence of the piston jump phenomenon appears, this piston can be estimated to be the abnormal piston where the piston jump phenomenon exactly has taken place. Thus, by determining a piston which reaches its bottom dead center at the time when a peak indicating occurrence of the piston jump phenomenon appears, it is possible to determine in which piston the piston jump phenomenon has occurred from among the plurality of pistons included in the hydraulic machine.

In the invention, the abnormal-piston determination part is configured to determine the piston having reached the bottom dead center at the time when the peak appears from data indicating temporal change of a rotation angle of the rotational shaft.

As the rotational angle of the rotational shaft and the time when each piston reaches its bottom dead center correlate with each other, they can be associated with each other. In this case, from a rotation angle of the rotational shaft at the time when a peak in the waveform indicating temporal change of acceleration appears, it is possible to determine a piston which has reached its bottom dead center at this time, using data which indicates the temporal change in the rotation angle of the rotational shaft. Accordingly, it is possible to determine in which piston the piston jump phenomenon has occurred from among the plurality of pistons included in the hydraulic machine.

The hydraulic machine is a hydraulic motor of a hydraulic transmission which includes: a hydraulic pump which is configured to be driven by mechanical energy inputted to a rotational shaft; and the hydraulic motor, which is configured to be driven by pressurized oil from the hydraulic pump.

In this case, as vibration due to collision between the rotational shaft and a piston transmits from the rotational shaft to the casing via a mechanical element included in the hydraulic motor (a bearing, for instance), it may be considered that the vibration can be detected at the casing side. Further, by bringing the hydraulic motor into an unloaded state, it is possible to prevent vibration due to causes other than the piston jump phenomenon in the hydraulic motor, which enables specifically detecting vibration due to the piston jump phenomenon using a vibration sensor.

Accordingly, the above diagnosis apparatus for a hydraulic machine makes it possible to detect vibration due to the piston jump phenomenon from the outside of the hydraulic motor.

The hydraulic transmission is a power transmitting part of a renewable energy power generating apparatus which includes: at least one blade; a rotational shaft configured to rotate by renewable energy received by the at least one blade; the power transmitting part, to which rotation energy of the rotational shaft is inputted, and a generator configured to be driven by the rotation energy inputted via the power transmitting part.

In this case, as vibration due to collision between the rotational shaft and a piston transmits from the rotational shaft to the casing via a mechanical element included in the hydraulic motor (a bearing, for instance), it may be considered that the vibration can be detected at the casing side. Further, by bringing the hydraulic motor into an unloaded state, it is possible to prevent vibration due to causes other than the piston jump phenomenon in the hydraulic motor, which enables specifically detecting vibration due to the piston jump phenomenon using a vibration sensor.

Accordingly, the above diagnosis apparatus for a hydraulic machine makes is possible to detect vibration due to the piston jump phenomenon from the outside of the hydraulic motor.

According to the present invention, it is possible to detect the piston jump phenomenon from the outside of a hydraulic machine.

### BRIEF DESCRIPTION OF DRAWINGS

FIG. 1 is a diagram illustrating an interior configuration of a hydraulic machine according to one embodiment and a configuration of a diagnosis apparatus according to one embodiment.
FIG. 2 is a diagram illustrating an interior configuration of a hydraulic machine according to one embodiment and a configuration of a diagnosis apparatus according to one embodiment.
FIGs. 3A to 3C are graphs each showing temporal change of pressure inside a cylinder (in-cylinder pressure), casing acceleration, and a rotation angle of a rotational shaft, respectively, upon occurrence of the piston jump phenomenon in an unloaded state.
FIGs.4A and 4B are graphs each showing a relationship between a rotation angle of a rotational shaft and casing acceleration upon normal operation of a hydraulic motor.
FIG. 5 is a schematic diagram of a hydraulic transmission according to one embodiment.
FIG. 6 is a schematic overall configuration of a renewable energy power generating apparatus (wind turbine power generating apparatus) according to one embodiment.
FIG. 7 is a schematic diagram of a configuration of a diagnosis apparatus of a hydraulic machine and a flow of measured information according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

In the embodiments below, a case where a hydraulic motor is a hydraulic machine will be described, the hydraulic machine being subject to diagnosis. However, the present invention can be similarly applied to a case where a hydraulic pump or another hydraulic machine is subject to a diagnosis.

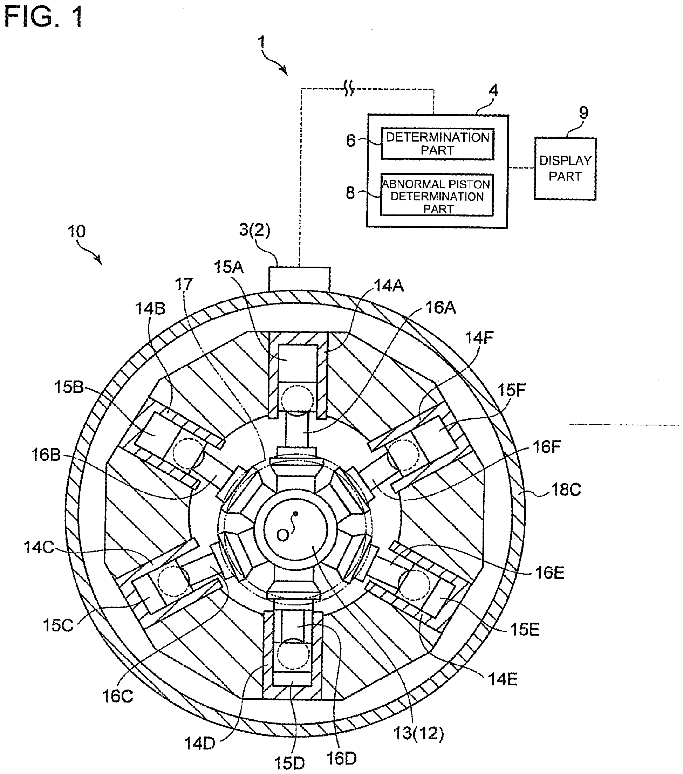

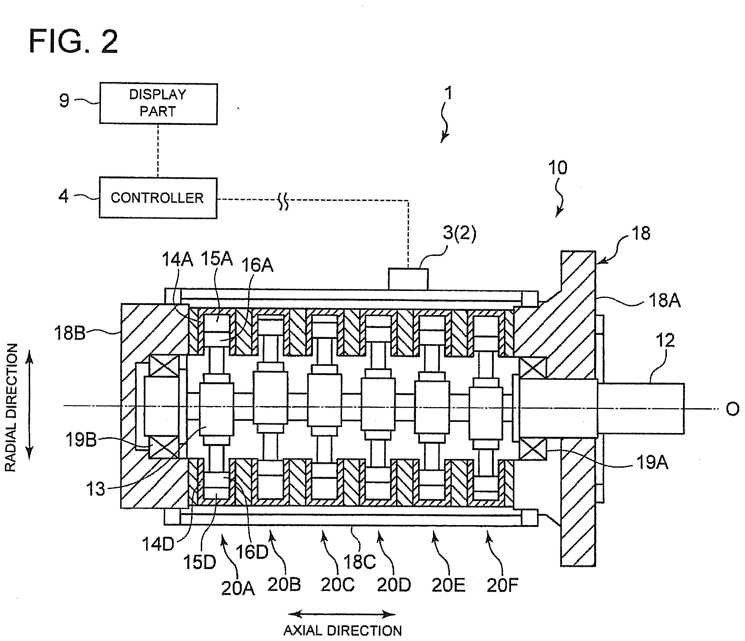

As illustrated in FIGs. 1 and 2, a hydraulic machine 10 which undergoes diagnosis of a diagnosis method for a hydraulic machine according to one embodiment includes a rotational shaft 12, a plurality of cylinders 14 (14A to 14F), a plurality of pistons 16 (16A to 16F), and a casing 18 for accommodating the cylinders 14 and the pistons 16. Each piston 16 is guided by corresponding one of the cylinders 14 to reciprocate in relation to rotation of the rotational shaft 12. In FIGs. 1 and 2, the point O indicates an axial center of the rotational shaft 12.

In the embodiment illustrated in FIGs. 1 and 2, the hydraulic machine 10 is a hydraulic motor and configured to be driven by high-pressure working oil supplied thereto. The hydraulic motor being the hydraulic machine 10 includes an eccentric cam 13 which rotates with the rotational shaft 12, a plurality of pistons 16 (16A to 16F), and a plurality of cylinders 14 (14A to 14F). Each piston 16 and corresponding one of the cylinders 14 together form a hydraulic chamber 15 (15A to 15F). A high pressure oil line (not illustrated) and a low pressure oil line (not illustrated) are connected to each hydraulic chamber 15, so that the working oil, which is a working fluid, is supplied and discharged through a valve mechanism (not illustrated).

The plurality of pistons 16 and the plurality of cylinders 14 are each radially disposed around the eccentric cam 13. The pistons 16 are reciprocated at different phases from one another by the working oil in the hydraulic chambers 15 and by the eccentric cam 13. That is, when each piston 16 moves from a top dead center toward a bottom dead center, each piston 16 is pushed down toward the eccentric cam 13 along a cylinder axis by the working oil introduced into the corresponding hydraulic chamber 15 from the high pressure oil line (not illustrated). At this time, the eccentric cam 13 is pressed against by each piston 16, which results in rotation of the eccentric cam 13. As the eccentric cam 13 rotates, a piston 16 being positioned in the vicinity of the bottom dead center is pushed up by the eccentric cam 13, so that the working oil in the corresponding hydraulic chamber 15 is discharged to the low pressure oil line (not illustrated).

As a result of such periodical reciprocating motion of the pistons, the rotational shaft 12 coupled to the eccentric cam 13 rotates.

The rotational shaft 12 may be connected to, for instance, a generator (not illustrated), and configured to drive the generator by transmitting rotational motion of the rotational shaft 12 to the generator.

The casing 18, as illustrated in FIGs. 1 and 2 for instance, includes end plates 18A, 18B disposed on both ends in the axial direction of the hydraulic machine 10 and a cylindrical case 18C disposed between the end plates 18A, 18B. To the casing 18, vibration of the rotational shaft 12 transmits via bearings 19A, 19B that support the rotational shaft 12.

Here, as illustrated in FIG. 2, the hydraulic machine 10 may include a plurality of banks 20 (20A to 20F) each including an eccentric cam 13 and also including a plurality of pistons 16 (16A to 16F), a plurality of cylinders 14 (14A to 14F), and a plurality of hydraulic chambers 15 (15A to 15F) corresponding to the eccentric cam 13.

A piston jump phenomenon takes place according to the following principle.

In the hydraulic machine 10, each piston 16 periodically reciprocates in a corresponding cylinder 14 in accordance with a cam profile of the eccentric cam 13 which corresponds to rotation of the rotational shaft 12. At this time, in order to prevent the pistons 16 from moving away and coming off the eccentric cam 13, contact between the pistons 16 and the eccentric cam 13 may be maintained using a retaining member 17 or the like for forcing the pistons 16 against the hydraulic machine 10 toward its radially inner side. Further, the retaining member 17 may include a retaining ring of a ring-like shape and an elastic body such as a spring which maintains contact between the pistons 16 and the eccentric cam 13 by its elastic force, the elastic body being disposed between the retaining ring and the pistons 16. Here, illustration of the retaining member 17 is omitted from FIG. 2.

However, for instance, when rotation speed of the rotational shaft 12 rises or friction between a piston 16 and a cylinder 14 increases due to occurrence of galling or damage on the sliding part of the piston 16 with respect to the cylinder 14, the piston 16 may come off the contacting surface between the piston 16 and a rotational shaft 12 side (for instance, the eccentric cam 13 rotating with the rotational shaft 12) even if the above retaining member 17 is provided. As a result, a so-called piston jump phenomenon takes place, in which the piston 16 and the the rotational shaft 12 side collide with each other upon the next contact of the piston 16 with the rotational shaft 12 side.

When this piston jump phenomenon occurs, the piston 16, the eccentric cam 13 or the like may get damaged by the collision.

The above described hydraulic machine 10 is subject to diagnosis of a diagnosis method for a hydraulic machine according to one embodiment. This diagnosis method includes a vibration detection step of detecting vibration of the casing 18 by a vibration sensor 2 disposed on the casing 18 while rotating the rotational shaft 12 in an unloaded state of the hydraulic machine 10, and a determination step of determining whether the piston jump phenomenon has occurred accompanied by collision and separation of at least one piston 16 with respect to the rotational shaft 12 side on the basis of the detection result detected by the vibration sensor 2.

In the vibration detection step, vibration of the casing 18 is detected while rotating the rotational shaft 12 in the unloaded state of the hydraulic machine 10.

An unloaded state of the hydraulic machine 10 means a state where displacement of the hydraulic machine 10 is zero, and there is no net intake nor discharge of the working oil between the high and low pressure oil lines and the hydraulic chambers 15, the hydraulic machine 10 performing no work.

For instance, an unloaded state in the case of a hydraulic pump means a state where low pressure valves for switching the communication state between the low pressure oil line and the hydraulic chambers 15 are maintained at the opened state and high pressure valves for switching the communication state between the high pressure oil line and the hydraulic chambers 15 are maintained at the closed state so that the pressure of the working oil is not increased in the hydraulic chambers. Further, an unloaded state in the case of a hydraulic motor means a state where the high pressure valves are maintained at the opened state and the low pressure valves at the closed state, so that the reciprocating motion of the pistons due to the working oil is not converted into rotational motion of the rotational shaft.

If the hydraulic machine 10 is in the unloaded state, vibration due to causes other than the piston jump phenomenon, such as vibration due to opening and closing of the valves and vibration due to pressure change of the working oil, barely takes place. Accordingly, by bringing the hydraulic machine 10 into the unloaded state, it is possible to eliminate the vibration (component N of the output of the vibration sensor) due to causes other than the piston jump phenomenon to increase the ratio S/N, and thus to detect the vibration (component S in the output of the vibration sensor) due to the piston jump phenomenon.

In order to rotate the rotational shaft 12 in the unloaded state of the hydraulic machine 10, in a diagnosis method according to one embodiment, the rotational shaft 12 is rotated using another driving source from the outside of the hydraulic machine 10. In this case, a generator connected to the rotational shaft 12 of the hydraulic machine 10 may be operated as an electric motor, rotating the rotational shaft 12 by rotation of the generator.

In a diagnosis method according to another embodiment, the hydraulic machine 10 may be switched to the unloaded state from a state where the hydraulic machine 10 in its normal operation in which the rotational shaft 12 is rotated, so the rotational shaft 12 rotates by inertia.

The rotation speed upon rotating the rotational shaft 12 in the unloaded state of the hydraulic machine 10 is not particularly limited. However, in one embodiment, the rotational shaft 12 may be rotated at a rotation speed of the hydraulic machine 10 in its normal operation (for instance, the rated rotation speed). In this case, it is possible to reproduce and detect the piston jump phenomenon under the same conditions as those of the normal operation of the hydraulic machine 10.

In the casing 18 of the hydraulic machine 10, a location on which the vibration sensor 2 is to be disposed is not limited, and may be any location where the vibration sensor 2 can capture vibration transmitted to the casing.

The vibration, which takes place on the rotational shaft 12 side (eccentric cam 13) by collision between at least one piston 16 and the rotational shaft 12 side upon occurrence of the piston jump phenomenon, transmits to a broad region on the casing 18 via the bearings 19A, 19B supporting the rotational shaft 12. Thus, the vibration sensor 2 may be disposed on any location within the broad region of the casing 18, to which the vibration transmits. Further, a location on which the vibration sensor 2 can be easily mounted may be selected on the basis of the shapes of the vibration sensor 2 or the casing 18, and the vibration sensor 2 may be disposed on this location.

In the determination step, on the basis of the detection result detected by the vibration sensor 2, it is determined whether the piston jump phenomenon accompanied by collision and separation of at least one piston 16 with respect to the rotational shaft 12 side has occurred.

In one embodiment, the detection result of the vibration sensor 2 is data related to time and vibration in the vertical direction of the hydraulic machine 10, obtained at the installation point of the vibration sensor 2. This detection result serves as the basis of determination of whether the piston jump phenomenon has occurred. For instance, if a value larger than a threshold value determined in advance appears periodically in the measurement data of vibration in the vertical direction, it may be determined that the piston jump phenomenon has occurred in one of the pistons 16 of the hydraulic machine 10.

In another embodiment, the detection result of the vibration sensor 2 is data related to time and vibration in each of the axial direction of the hydraulic machine 10, the vertical direction of the hydraulic machine 10, and a direction orthogonal to the axial direction and vertical direction of the hydraulic machine 10, obtained at the installation point of the vibration sensor 2. This detection result serves as the basis of determination for whether the piston jump phenomenon has occurred. For instance, if a value larger than a threshold value determined in advance appears periodically in the data of vibration in one of the above directions from among the measurement data, it may be determined that the piston jump phenomenon has occurred in one of the pistons 16 of the hydraulic machine 10.

The vibration, which is due to collision between the rotational shaft 12 and a piston 16, transmits to the casing from the rotational shaft via mechanical elements (for instance the bearings 19A, 19B) included in the hydraulic machine 10. Thus, it may be considered that the vibration can be detected on the casing 18 side. Further, by bringing the hydraulic machine 10 into the unloaded state, vibration due to causes other than the piston jump phenomenon is prevented in the hydraulic machine 10, which may make it possible to specifically detect vibration due to the piston jump phenomenon using the vibration sensor 2.

Accordingly, in the diagnosis method for the hydraulic machine 10 according to the above embodiment, it is possible to detect vibration due to the piston jump phenomenon from the outside of the hydraulic machine 10.

In the invention, the vibration sensor 2 is at least one acceleration meter 3 mounted on the casing 18. Also, in the vibration detection step, the at least one acceleration meter 3 is used to obtain a waveform which indicates temporal change in acceleration of the casing 18, and in the determination step, the piston jump phenomenon is determined to have occurred if a peak-to-rms ratio of a peak included in the obtained waveform is at least a predetermined threshold value.

Vibration of the casing 18 is captured as acceleration. Thus, in one embodiment, an acceleration sensor 3 may be used as the vibration sensor 2.

In the vibration detection step, by measuring acceleration due to vibration of the casing 18 using an acceleration sensor 3, it is possible to obtain a waveform which indicates temporal change of the acceleration. By using this waveform as data which indicates vibration of the casing 18, it is possible to detect the piston jump phenomenon.

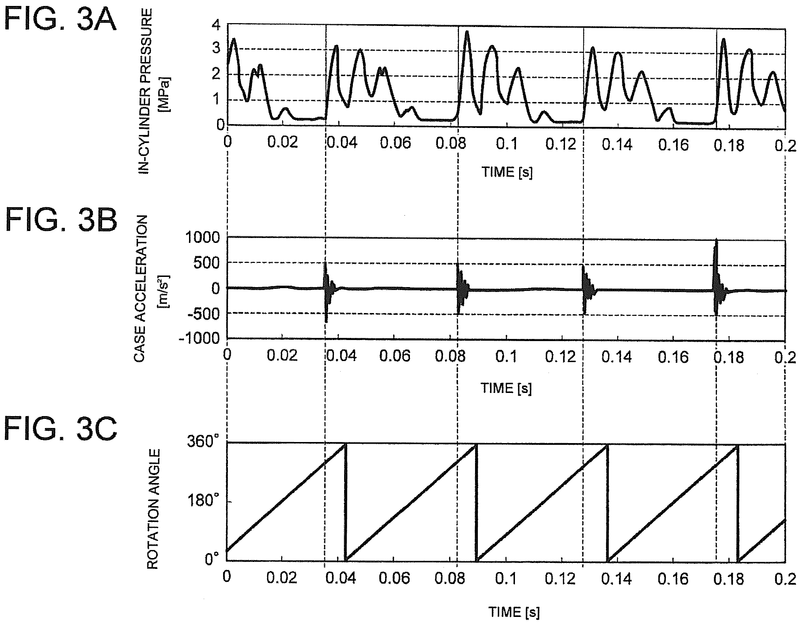

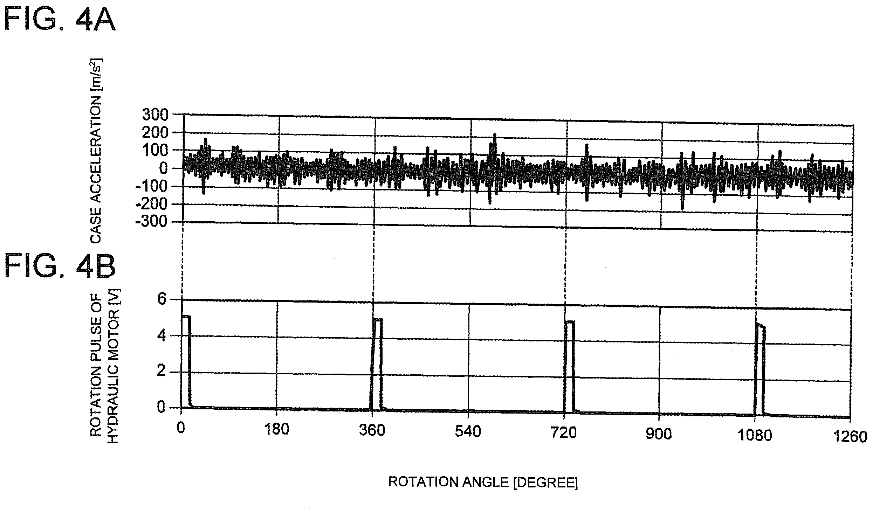

Here, FIGs. 3A to 3C are graphs each showing temporal change of pressure inside a cylinder (in-cylinder pressure), casing acceleration (case acceleration), and a rotation angle of the rotational shaft, respectively, upon occurrence of the piston jump phenomenon in the unloaded state. FIGs.4A and 4B are each a graph of a relationship between the rotation angle of the rotational shaft with the rotation pulse of the hydraulic motor and the casing acceleration (case acceleration) upon normal operation.

As clearly illustrated in FIGs. 4A and 4B, during normal operation of a hydraulic machine 10 (herein a hydraulic motor), change in acceleration may be observed continually in the casing 18 in a single rotation of the rotational shaft (for instance, a section in FIG. 4B, where the rotation angle is from 0° to 360°), indicating that vibration is continuously occurring. This may be caused by occurrence of vibration in the casing 18 due to various causes such as opening and closing of each valve and pressure change of the working oil. In this case, the ratio S/N, which is a ratio of vibration (component S in the output of the vibration sensor) due to the piston jump phenomenon to vibration (component N in the output of the vibration sensor) due to causes other than the piston jump phenomenon, becomes small, which makes it difficult to determine occurrence of vibration due to the piston jump phenomenon from FIGs. 4A and 4B. Here, the rotation pulse of the hydraulic motor in FIG. 4B is a pulse signal which is generated upon every single rotation of the rotational shaft of the hydraulic motor, indicating that the rotational shaft has completed a single rotation between a peak and the next peak.

On the other hand, as can be seen in FIGs. 3B and 3C, in a case where the hydraulic machine 10 is brought into the unloaded state, a remarkable case acceleration is periodically measured at a certain rotation angle (around 300° in FIG. 3). As described above, occurrence of a shock due to collision between a piston and the rotational shaft side appears as a peak in the waveform obtained by the acceleration meter. Also, it can be seen that the case acceleration is substantially zero besides this remarkable vibration and damped vibration which follows immediately, which means that vibration due to causes other than the piston jump phenomenon is not present.

As described above, by using an acceleration meter in the unloaded state, it is possible to obtain a waveform with an improved ratio S/N like the one illustrated in FIG. 3B, and thus to detect the piston jump phenomenon.

Here, FIG. 3A is measurement data of pressure in a cylinder 14 (in-cylinder pressure). Since a large peak appears periodically in the data when measuring in-cylinder pressure in a cylinder where the piston jump phenomenon has occurred, it is possible to detect the piston jump phenomenon using the in-cylinder pressure data. However, in order to determine in which piston the piston jump phenomenon has occurred in this way, it may be necessary to provide a pressure sensor in every cylinder, which may increase the cost.

In the determination step, it is determined whether the piston jump phenomenon has occurred on the basis of a peak-to-rms ratio of a peak included in the obtained waveform.

A peak-to-rms ratio of a peak included in the obtained waveform is a ratio (aₚ/aᵣₘₛ) of a peak value (aₚ) of acceleration acquired from the obtained waveform to an rms value (aᵣₘₛ) of acceleration. If the peak-to-rms ratio is larger than a threshold value set in advance (for instance, two), it may be determined that the piston jump phenomenon has occurred at the time when the corresponding peak has appeared.

In some embodiments, the diagnosis method further includes an abnormal-piston determination step of determining an abnormal piston where the piston jump phenomenon has occurred. In the abnormal-piston determination step, a piston that reaches its bottom dead center at the time when a peak indicating occurrence of the piston jump phenomenon appears is determined as an abnormal piston.

The piston jump phenomenon occurs when the piston 16 is positioned in the vicinity of the bottom dead center and gets closest to the rotational shaft 12 side. Thus, it may be estimated that a piston 16 that reaches the bottom dead center at the time when a peak indicating occurrence of the piston jump phenomenon appears is the abnormal piston where the piston jump phenomenon has occurred. As a result, by determining a piston 16 that reaches the bottom dead center at the time when a peak indicating occurrence of a piston jump phenomenon appears, it is possible to figure out in which piston the piston jump phenomenon has occurred, from among the plurality of pistons 16 included in the hydraulic machine 10.

In some embodiments, the diagnosis method for a hydraulic machine further includes a data acquisition step of acquiring data indicating temporal change of the rotation angle of the rotational shaft 12. Also, in the abnormal piston determination step, from the data indicating temporal change of the rotation angle of the rotational shaft 12 acquired in the data acquisition step, a piston that reaches the bottom dead center at the time when a peak indicating occurrence of the piston jump phenomenon appears is determined.

The rotation angle of the rotational shaft 12 and the time when each piston 16 reaches its bottom dead center are correlated with each other, and thus they can be associated with each other. In this case, from the rotation angle of the rotational shaft 12 at the time when a peak appears in the waveform indicating temporal change of acceleration, it is possible to determine a piston 16 that reaches the bottom dead center at this time, using the data indicating temporal change of the rotation angle of the rotational shaft 12. Thus, it is possible to figure out in which piston 16 the piston jump phenomenon has occurred, from among the plurality of pistons 16 included in the hydraulic machine 10.

For instance, it is assumed here that the rotation angle of the rotational shaft, at which the piston 16A in FIG. 1 reaches its bottom dead center, is the rotation angle 0° ( = 360°) in FIG. 3C. In the hydraulic machine 10 illustrated in FIG. 1, six pistons (16A to 16F) reciprocate at phases different from one another by 60° because they are responsive to one eccentric cam 13 and arranged at equal intervals. Accordingly, at the rotation angles 60°, 120°, 180°, 240°, and 300° of the rotational shaft, the pistons 16B, 16C, 16D, 16E, and 16F reach their bottom dead center, respectively.

In the graph from FIG. 3, a remarkable vibration is present in the casing 18 at the rotation angle of approximately 300°. At the time when the rotational angle is 300°, the piston 16F from FIG. 1 reaches its bottom dead center. Thus, in this case, it is possible to determine that the piston jump phenomenon has occurred in the piston 16F, i.e., that the abnormal piston with the piston jump phenomenon is the piston 16F.

Further, in the case where the hydraulic machine 10 is switched to the unloaded state from the state where the rotational shaft 12 is rotating in normal operation of the hydraulic machine 10 so that the rotational shaft 12 rotates by inertia in order to rotate the rotational shaft 12 in the unloaded state of the hydraulic machine 10, the rotation speed may change (in this case, decrease) due to occurrence of mechanical loss or the like of kinetic energy caused by rotation of the rotational shaft 12, reciprocal motion of the pistons 16, or the like even when the hydraulic machine 10 is in the unloaded state.

However, if the diagnosis method according to the embodiment is carried out in such a short period of time that the above change in the rotation speed can be ignored, the change in the rotation speed may not cause a problem.

Further, in the case where the rotation speed changes, while the time duration between the peaks in the graph of the case acceleration illustrated in FIG. 3B changes, the cycle of the rotation angle of the rotational shaft illustrated in FIG. 3C changes in a similar manner. Therefore, it is still possible to associate the time when a peak of case acceleration (i.e., a peak indicating occurrence of the piston jump phenomenon) appears with a piston that has reached its bottom dead center at this time.

Furthermore, in the case of a hydraulic machine having a plurality of banks 20 (20A to 20F) as illustrated in FIG. 2, more than one piston 16 may reach the bottom dead center at the same time in more than one bank 20. For instance, there may be a configuration in which, at a certain point of time, the piston 16A reaches its bottom dead center in the bank 20A, the piston 16B at a phase offset from the piston 16A by 60° reaches its bottom dead center in the bank 20B, and the pistons 16C, 16D, 16E and 16F at phases further offset from one another by 60° reach their bottom dead center in the banks 20C, 20D, 20E and 20F, respectively. In this case, every time the rotational shaft 12 rotates by 60°, six pistons 16 reach their bottom dead center spontaneously.

Even in this case, it is possible to determine or narrow down in which bank 20 the piston jump phenomenon has occurred by acquiring data of vibration related to each of a plurality of directions (for instance, three directions including the axial direction of the hydraulic machine 10, the vertical direction of the hydraulic machine 10, and a direction orthogonal to the axial direction and vertical direction of the hydraulic machine 10) by the vibration sensor 2.

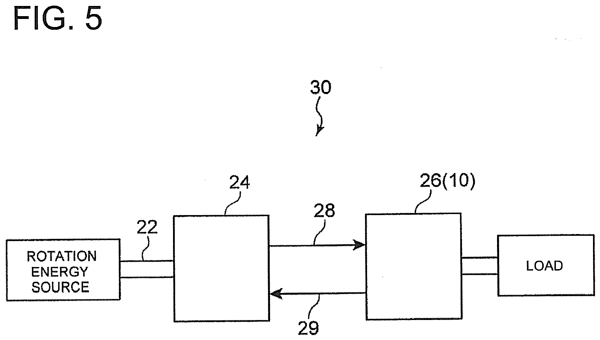

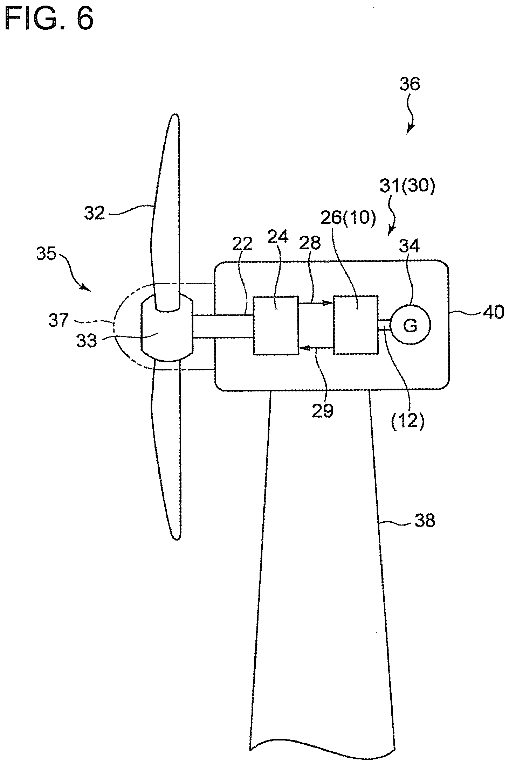

FIG. 5 is a schematic diagram of a hydraulic transmission according to one embodiment. FIG. 6 is a schematic diagram of overall configuration of a renewable energy power generating apparatus (wind turbine power generating apparatus) according to one embodiment.

In some embodiments, as illustrated in FIGs. 5 and 6, the hydraulic machine 10 is a hydraulic motor 26 of a hydraulic transmission 30. The hydraulic transmission 30 includes a hydraulic pump 24 configured to be driven by mechanical energy inputted into the rotation shaft 22, and the hydraulic motor 26, which is configured to be driven by pressurized oil from the hydraulic pump 24.

In some embodiments, as illustrated in FIGs. 5 and 6, the hydraulic transmission 30 includes the hydraulic pump 24 and the hydraulic motor 26, which are connected to each other via a high pressure oil line 28 which connects a discharge side of the hydraulic pump 24 and an intake side of the hydraulic motor 26, and via a low pressure oil line 29 which connects an intake side of the hydraulic pump 24 and a discharge side of the hydraulic motor 26.

The hydraulic pump 24 is driven by a rotation shaft 22 which rotates by rotation energy supplied from a rotation energy source to generate high pressure working oil (pressurized oil). The pressurized oil generated in the hydraulic pump 24 is supplied to the hydraulic motor 26 via the high pressure oil line 28, and then the hydraulic motor 26 is driven by this pressurized oil. The hydraulic motor 26 performs work in response to the load, and the low pressure working oil after having performed work is returned to the hydraulic pump 24 again via the low pressure oil line 29.

In one embodiment, as illustrated in FIG. 6, the hydraulic transmission 30 is a power transmitting part 31 of a renewable energy power generating apparatus (wind turbine power generating apparatus) 36, which includes at least one blade 32, a rotation shaft 22 which rotates by renewable energy received by the at least one blade 32, the power transmitting part 31, to which rotation energy of the rotation shaft 22 is inputted, and a generator 34 driven by the rotation energy inputted via the power transmitting part 31.

As illustrated in FIG. 6, a renewable energy power generating apparatus (wind turbine power generating apparatus) 36 according to one embodiment includes a rotor 35 which includes a plurality of blades 32 and a hub 33. Here, the hub 33 may be covered by a hub cover 37. Also, at least a part of the rotation shaft 22 may be covered by a nacelle 40 disposed on the tower 38. The hydraulic pump 24, the hydraulic motor 26, and the generator 34 may be disposed inside the nacelle 40.

The hub 33 is coupled to the rotation shaft 22 accommodated in the nacelle 40. As a result, when the rotor 35 rotates upon receiving wind at the blades 32, the rotation shaft 22 coupled to the hub 33 also rotates. Then, the rotation energy of the rotation shaft 22 is inputted into the hydraulic pump 24 being a part of the power transmitting part 31 so that the hydraulic pump is driven.

The rotational shaft 12 of the hydraulic motor 26, which is driven by the pressurized oil generated in the hydraulic pump 24, is connected to the generator 34, which is driven by the rotation of the rotational shaft 12 of the hydraulic motor 26 so that electric power is generated in the generator 34.

Here, the renewable energy power generating apparatus (wind turbine power generating apparatus) 36 may be an offshore wind turbine power generating apparatus installed on sea surface SL, or it may be installed on the land.

In one embodiment, as described above, the renewable energy power generating apparatus 36 is a wind turbine power generating apparatus. In other embodiments, the renewable energy power generating apparatus 36 may be another type of renewable energy power generating apparatus such as a tidal current power generating apparatus, an ocean current power generating apparatus, and a river current power generating apparatus.

A diagnosis apparatus 1 illustrated in FIG. 1 is for the above described hydraulic machine 10, and includes a vibration sensor 2 and a determination part 6.

The vibration sensor 2 is for detecting vibration of the casing 18 which occurs upon rotation of the rotational shaft 12 in the unloaded state of the hydraulic machine 10, the vibration sensor 2 being disposed on the casing 18. As described above, on the casing 18 of the hydraulic machine 10, the location on which the vibration sensor 2 is to be mounted is not limited and it may be disposed anywhere vibration can be captured, the vibration having been transmitted to the casing.

The determination part 6 determines, on the basis of the detection result detected by the vibration sensor 2, whether the piston jump phenomenon has occurred accompanied by collision and separation of at least one piston 16 with respect to the rotational shaft 12 side. The determination part 6 may be included in a controller 4 which receives various kinds of information measured by the vibration sensor.

The determination part 6 stores conditions for determining whether the piston jump phenomenon has occurred and determines whether the piston jump phenomenon has occurred on the basis of the detection result detected by the vibration sensor 2. The controller 4 may be configured to send a command to a display part 9 (a monitor, for instance) to display a result of the above determination.

In the invention, the vibration sensor 2 is at least one acceleration meter 3 mounted to the casing 18 and configured to obtain a waveform which indicates temporal change in acceleration of the casing 18, and the determination part 6 is configured to determine that the piston jump phenomenon has occurred if a peak-to-rms ratio of a peak included in the waveform is at least a predetermined threshold value.

By using the acceleration meter 3, it is possible to obtain the temporal change of the vibration as temporal change of the acceleration. Thus, occurrence of a shock due to collision between at least one piston 16 and the rotational shaft 12 side appears in the waveform obtained by the acceleration meter 3 in the form of a peak (see FIG. 3B, for instance). Accordingly, since occurrence of the piston jump phenomenon is determined by a peak-to-rms ratio of a peak included in the waveform, it is possible to detect the piston jump phenomenon by detecting a peak in the waveform of acceleration by setting a threshold value of the peak-to-rms ratio in advance.

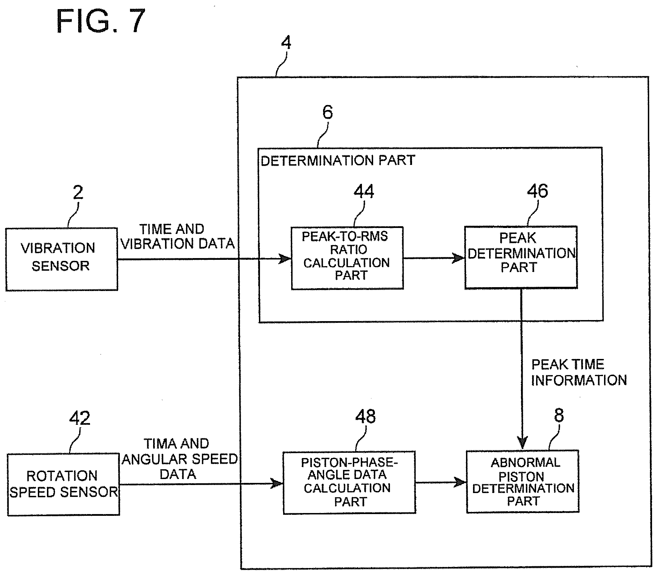

Here, FIG. 7 is a schematic diagram of a configuration of a diagnosis apparatus of a hydraulic machine and a flow of measured information according to one embodiment.

In one embodiment, as illustrated in FIG. 7, the determination part 6 includes a peak-to-rms ratio calculation part 44 and a peak determination part 46. The peak-to-rms ratio calculation part 44 calculates a peak-to-rms ratio of a peak included in a waveform of acceleration from the data related to time and acceleration (vibration) received from the acceleration sensor 3 (vibration sensor 2). Here, the peak-to-rms ratio is a ratio (aₚ/aᵣₘₛ) of a peak value (aₚ) of acceleration to an rms value (aᵣₘₛ) of acceleration. The peak determination part 46 stores a threshold value of the peak-to-rms ratio that is set in advance as a condition for determining whether the piston jump phenomenon has occurred. Then, the peak determination part 46 receives the peak-to-rms ratio calculated by the peak-to-rms ratio calculating part 44 and determines that the piston jump phenomenon has occurred in the hydraulic machine if the peak-to-rms ratio is not less than the threshold value stored in advance.

In some embodiments, as illustrated in FIG. 1, the diagnosis apparatus 1 further includes an abnormal piston determination part 8 which determines an abnormal piston where a piston jump phenomenon has occurred. The abnormal piston determination part is configured to determine a piston 16 to be an abnormal piston if the piston 16 reaches its bottom dead center at the time when a peak indicating occurrence of a piston jump phenomenon appears.

The abnormal piston determination part 8 may be included in the controller 4, which receives various kinds of information measured by the vibration sensor.

The abnormal piston determination part 8 may store time information related to the time when each of the pistons 16 (16A to 16F) of the hydraulic machine 10 reaches its bottom dead center, and associate this information on the time to reach the bottom dead center with the time when a peak indicating occurrence of the piston jump phenomenon appears detected by the vibration sensor 2, so as to determine a piston 16 where the piston jump phenomenon has occurred as an abnormal piston. The controller 4 may be configured to send a command to the display part 9 (a monitor, for instance) to display a result of the above determination.

In some embodiments, the abnormal piston determination part 8 is configured to determine a piston 16 that has reached the bottom dead center at the time when a peak appears from the data indicating temporal change of the rotation angle of the rotational shaft 12.

In one embodiment, as illustrated in FIG. 7, the hydraulic machine 10 includes a rotation speed sensor 42 for measuring rotation speed (angular speed) of the rotational shaft 12 of the hydraulic machine 10. Further, the controller 4 includes a determination part 6, an abnormal piston determination part 8, and a piston-phase-angle calculation part 48. The data on time and angular speed measured by the rotation speed sensor 42 is sent to the piston-phase-angle calculation part 48. The piston-phase-angle calculation part 48 calculates, on the basis of the received data, data which indicates temporal change of the phase angle of each piston 16 of the hydraulic machine 10 for each point of time.

The abnormal piston determination part 8 receives information on the appearance time when a peak indicating occurrence of the piston jump phenomenon appears from the peak determination part 46, and also receives the data indicating temporal change of the phase angle of each piston 16 at each point of time calculated by the piston-phase-angle calculation part 48 from the piston-phase-angle calculation part 48. Then, on the basis of the above data, the abnormal piston determination part 8 associateswhen a peak indicating occurrence of the piston jump phenomenon appears with the temporal change of the phase angle of each piston 16 to determine a piston 16 to be an abnormal piston, the piston 16 being at a phase where it reaches the bottom dead center at the corresponding time.

In some embodiments, the hydraulic machine 10, which is subject to diagnosis of the diagnosis apparatus 1, is a hydraulic motor 26 of a hydraulic transmission 30. As illustrated in FIG. 5, the hydraulic transmission 30 includes a hydraulic pump 24 configured to be driven by mechanical energy inputted into the rotation shaft 22 and the hydraulic motor 26, which is configured to be driven by pressurized oil from the hydraulic pump 24.

Since the configuration of the hydraulic transmission from FIG. 5 is described above in detail, the description will be omitted here.

In some embodiments, the hydraulic transmission 30 of the hydraulic machine 10, which is subject to diagnosis of the diagnosis apparatus 1, is a power transmitting part 31 of a renewable energy power generating apparatus 36. As illustrated in FIG. 6, the renewable energy power generating apparatus 36 includes at least one blade 32, a rotation shaft 22 which rotates by renewable energy received by the at least one blade 32, the power transmitting part 31, to which rotation energy of the rotation shaft 22 is inputted, and a generator 34 driven by the rotation energy inputted via the power transmitting part 31.

Since the configuration of the renewable energy power generating apparatus from FIG. 6 is described above in detail, the description will be omitted here.

### Reference Signs List

- 1: Diagnosis apparatus
- 2: Vibration sensor
- 3: Acceleration meter
- 4: Controller
- 6: Determination part
- 8: Abnormal piston determination part
- 9: Display part
- 10: Hydraulic machine
- 12: Rotational shaft
- 13: Cam
- 14: Cylinder
- 15: Hydraulic chamber
- 16: Piston
- 17: Retaining member
- 18: Casing
- 19: Bearing
- 20: Bank
- 22: Rotation shaft
- 24: Hydraulic pump
- 26: Hydraulic motor
- 28: High pressure oil line
- 29: Low pressure oil line
- 30: Hydraulic transmission
- 31: Power transmitting part
- 32: Blade
- 33: Hub
- 34: Generator
- 35: Rotor
- 36: Renewable energy power generating apparatus

## Claims

1. A diagnosis method for a hydraulic machine (10) including a rotational shaft (12), a plurality of cylinders (14), a plurality of pistons (16) each configured to be guided by each of the plurality of cylinders (14) to reciprocate in relation to rotation of the rotational shaft (12), and a casing (18) for accommodating the cylinders (14) and pistons (16), the diagnosis method **characterized by** comprising:
a vibration detection step of detecting vibration of the casing (18) by a vibration sensor (2) disposed on the casing (18) while rotating the rotational shaft (12) in an unloaded state of the hydraulic machine (10); and
a determination step of determining, on the basis of a detection result detected by the vibration sensor (2), whether a piston jump phenomenon which is accompanied by collision and separation of at least one of the pistons (16) with respect to a rotational shaft (12) side has occurred,
wherein the vibration sensor (2) is at least one acceleration meter (3) mounted on the casing (18),
wherein, in the vibration detection step, a waveform which indicates temporal change of acceleration of the casing (18) is obtained by the at least one acceleration meter (3), and
wherein, in the determination step, the piston jump phenomenon is determined to have occurred if a peak-to-rms ratio of a peak included in the waveform is at least a predetermined threshold value.

2. The diagnosis method for a hydraulic machine (10) according to claim 1, further comprising
an abnormal-piston determination step of determining an abnormal piston where the piston jump phenomenon has occurred,
wherein, in the abnormal-piston determination step, a piston (16) which has reached a bottom dead center at a time when the peak indicating occurrence of the piston jump phenomenon has appeared is determined as the abnormal piston.

3. The diagnosis method for a hydraulic machine (10) according to claim 2, further comprising
a data acquisition step of acquiring data which indicates temporal change of a rotation angle of the rotational shaft (12),
wherein, in the abnormal-piston determination step, the piston (16) that has reached the bottom dead center is determined from the data indicating the temporal change of the rotation angle of the rotational shaft (12) acquired in the data acquisition step.

4. The diagnosis method for a hydraulic machine (10) according to any one of claims 1 to 3,
wherein the hydraulic machine (10) is a hydraulic motor (26) of a hydraulic transmission (30) which includes:
a hydraulic pump (24) which is configured to be driven by mechanical energy inputted to a rotational shaft (22); and
the hydraulic motor (26), which is configured to be driven by pressurized oil from the hydraulic pump (24).

5. The diagnosis method for a hydraulic machine (10) according to claim 4,
wherein the hydraulic transmission (30) is a power transmitting part of a renewable energy power generating apparatus (36) which includes:
at least one blade (32);
a rotation shaft (22) configured to rotate by renewable energy received by the at least one blade (32);
the power transmitting part (31), to which rotation energy of the rotation shaft (22) is inputted, and
a generator (34) configured to be driven by the rotation energy inputted via the power transmitting part (31).

6. The diagnosis method according to any of claims 1-5, wherein the rotational shaft (12) is supported on the casing (18) via a bearing (19).

7. A diagnosis apparatus (1) for a hydraulic machine (10) including a rotational shaft (12), a plurality of cylinders (14), a plurality of pistons (16) each of which is configured to be guided by each of the plurality of cylinders (14) to reciprocate in relation to rotation of the rotational shaft (12), and a casing (18) for accommodating the cylinders (14) and pistons (16), the diagnosis apparatus (1) **characterized by** comprising:
a vibration sensor (2) which is disposed on the casing (18) and configured to detect vibration of the casing (18) which occurs during rotation of the rotational shaft (12) in an unloaded state of the hydraulic machine (10); and
a determination part (6) configured to determine, on the basis of a detection result detected by the vibration sensor (2), whether a piston jump phenomenon accompanied by collision and separation of at least one of the pistons (16) with respect to a rotational shaft (12) side has occurred,
wherein the vibration sensor (2) is at least one acceleration meter (3) which is mounted on the casing (18) and configured to obtain a waveform which indicates temporal change of acceleration of the casing (18), and
wherein the determination part (6) is configured to determine that the piston jump phenomenon has occurred if a peak-to-rms ratio of a peak included in the waveform is at least a predetermined threshold value.

8. The diagnosis apparatus (1) for a hydraulic machine (10) according to claim 7, further comprising
an abnormal-piston determination part (8) configured to determine an abnormal piston where the piston jump phenomenon has occurred,
wherein the abnormal-piston determination part (8) is configured to determine a piston (16) that has reached a bottom dead center at a time when the peak indicating occurrence of the piston jump phenomenon has appeared as the abnormal piston.

9. The diagnosis apparatus (1) for a hydraulic machine (10) according to claim 8,
wherein the abnormal-piston determination part is configured to determine the piston (16) having reached the bottom dead center at the time when the peak indicating occurrence of the piston jump phenomenon has appeared from data indicating temporal change of a rotation angle of the rotational shaft (12).

## Patentansprüche

1. Diagnoseverfahren für eine Hydraulikmaschine (10), die eine Drehwelle (12), eine Vielzahl von Zylindern (14), eine Vielzahl von Kolben (16), von denen jeder dazu ausgelegt ist, von jedem der Vielzahl von Zylindern (14) geführt zu werden, um sich mit Bezug auf eine Drehung der Drehwelle (12) hin und her zu bewegen, und ein Gehäuse (18) zum Aufnehmen der Zylinder (14) und Kolben (16) beinhaltet, wobei das Diagnoseverfahren **dadurch gekennzeichnet ist, dass** es Folgendes umfasst:
einen Vibrationsdetektionsschritt zum Detektieren von Vibrationen des Gehäuses (18) durch einen Vibrationssensor (2), der auf dem Gehäuse (18) angeordnet ist, während die Drehwelle (12) in einem unbelasteten Zustand der Hydraulikmaschine (10) gedreht wird; und
einen Bestimmungsschritt zum Bestimmen auf Basis eines Detektionsergebnisses, das vom Vibrationssensor (2) detektiert wird, ob ein Kolbensprungphänomen, das von einer Kollision und Trennung von mindestens einem der Kolben (16) mit Bezug auf eine Seite der Drehwelle (12) begleitet wird, aufgetreten ist,
wobei der Vibrationssensor (2) mindestens ein Beschleunigungsmesser (3) ist, der auf dem Gehäuse (18) montiert ist,
wobei im Vibrationsdetektionsschritt eine Wellenform, die eine zeitliche Änderung der Beschleunigung des Gehäuses (18) anzeigt, von dem mindestens einen Beschleunigungsmesser (3) erhalten wird und
wobei im Bestimmungsschritt bestimmt wird, dass das Kolbensprungphänomen aufgetreten ist, wenn ein Spitze-zu-RMS-Verhältnis einer Spitze, die in der Wellenform beinhaltet ist, mindestens ein vorbestimmter Schwellwert ist.

2. Diagnoseverfahren für eine Hydraulikmaschine (10) nach Anspruch 1, das ferner Folgendes umfasst
einen Bestimmungsschritt für unnormale Kolben zum Bestimmen eines unnormalen Kolbens, wo das Kolbensprungphänomen aufgetreten ist,
wobei im Bestimmungsschritt für unnormale Kolben ein Kolben (16), der zu einer Zeit, zu der die Spitze, die ein Auftreten des Kolbensprungphänomens anzeigt, erschienen ist, einen unteren Totpunkt erreicht hat, als der unnormale Kolben bestimmt wird.

3. Diagnoseverfahren für eine Hydraulikmaschine (10) nach Anspruch 2, das ferner Folgendes umfasst
einen Datenerfassungsschritt zum Erfassen von Daten, die eine zeitliche Änderung eines Drehwinkels der Drehwelle (12) anzeigen,
wobei im Bestimmungsschritt für unnormale Kolben der Kolben (16), der den unteren Totpunkt erreicht hat, anhand der Daten bestimmt wird, die die zeitliche Änderung des Drehwinkels der Drehwelle (12) anzeigen und im Datenerfassungsschritt erfasst werden.

4. Diagnoseverfahren für eine Hydraulikmaschine (10) nach einem der Ansprüche 1 bis 3,
wobei die Hydraulikmaschine (10) ein Hydraulikmotor (26) eines Hydraulikgetriebes (30) ist, das Folgendes beinhaltet:
eine Hydraulikpumpe (24), die dazu ausgelegt ist, durch mechanische Energie, die auf eine Drehwelle (22) gegeben wird, angetrieben zu werden; und
den Hydraulikmotor (26), der dazu ausgelegt ist, durch unter Druck stehendes Öl von der Hydraulikpumpe (24) angetrieben zu werden.

5. Diagnoseverfahren für eine Hydraulikmaschine (10) nach Anspruch 4,
wobei das Hydraulikgetriebe (30) ein Kraftübertragungsteil einer Krafterzeugungsvorrichtung (36) für erneuerbare Energie ist, die Folgendes umfasst:
mindestens ein Blatt (32);
eine Drehwelle (22), die dazu ausgelegt ist, durch erneuerbare Energie, die von dem mindestens einen Blatt (32) empfangen wird, gedreht zu werden;
ein Kraftübertragungsteil (31), in das Drehenergie der Drehwelle (22) eingegeben wird, und
einen Generator (34), der dazu ausgelegt ist, von der Drehenergie, die via das Kraftübertragungsteil (31) eingegeben wird, angetrieben zu werden.

6. Diagnoseverfahren nach einem der Ansprüche 1-5, wobei die Drehwelle (12) am Gehäuse (18) via ein Lager (19) gestützt wird.

7. Diagnosevorrichtung (1) für eine Hydraulikmaschine (10), die eine Drehwelle (12), eine Vielzahl von Zylindern (14), eine Vielzahl von Kolben (16), von denen jeder dazu ausgelegt ist, von jedem der Vielzahl von Zylindern (14) geführt zu werden, um sich mit Bezug auf eine Drehung der Drehwelle (12) hin und her zu bewegen, und ein Gehäuse (18) zum Aufnehmen der Zylinder (14) und Kolben (16) beinhaltet, wobei die Diagnosevorrichtung (1) **dadurch gekennzeichnet ist, dass** sie Folgendes umfasst:
einen Vibrationssensor (2), der auf dem Gehäuse (18) angeordnet und dazu ausgelegt ist, eine Vibration des Gehäuses (18) zu detektieren, die während einer Drehung der Drehwelle (12) in einem unbelasteten Zustand der Hydraulikmaschine (10) auftritt; und
ein Bestimmungsteil (6), das dazu ausgelegt ist, auf Basis eines Detektionsergebnisses, das vom Vibrationssensor (2) detektiert wird, zu bestimmen, ob ein Kolbensprungphänomen, das von einer Kollision und Trennung von mindestens einem der Kolben (16) mit Bezug auf eine Seite der Drehwelle (12) begleitet wird, aufgetreten ist,
wobei der Vibrationssensor (2) mindestens ein Beschleunigungsmesser (3) ist, der auf dem Gehäuse (18) montiert und dazu ausgelegt ist, eine Wellenform zu erhalten, die eine zeitliche Änderung der Beschleunigung des Gehäuses (18) anzeigt, und
wobei das Bestimmungsteil (6) dazu ausgelegt ist zu bestimmen, dass das Kolbensprungphänomen aufgetreten ist, wenn ein Spitze-zu-RMS-Verhältnis einer Spitze, die in der Wellenform beinhaltet ist, mindestens ein vorbestimmter Schwellwert ist.

8. Diagnosevorrichtung (1) für eine Hydraulikmaschine (10) nach Anspruch 7, die ferner Folgendes umfasst
ein Bestimmungsteil (8) für unnormale Kolben, das dazu ausgelegt ist, einen unnormalen Kolben zu bestimmen, wo das Kolbensprungphänomen aufgetreten ist,
wobei das Bestimmungsteil (8) für unnormale Kolben dazu ausgelegt ist, einen Kolben (16), der zu einer Zeit, zu der die Spitze, die ein Auftreten des Kolbensprungphänomens anzeigt, erschienen ist, einen unteren Totpunkt erreicht hat, als den unnormalen Kolben zu bestimmen.

9. Diagnosevorrichtung (1) für eine Hydraulikmaschine (10) nach Anspruch 8,
wobei das Bestimmungsteil für unnormale Kolben dazu ausgelegt ist, den Kolben (16), der zu der Zeit, zu der die Spitze, die ein Auftreten des Kolbensprungphänomens anzeigt, erschienen ist, den unteren Totpunkt erreicht hat, anhand von Daten zu bestimmen, die eine zeitliche Änderung eines Drehwinkels der Drehwelle (12) anzeigen.

## Revendications

1. Procédé de diagnostic pour une machine hydraulique (10) comprenant un arbre de rotation (12), une pluralité de cylindres (14), une pluralité de pistons (16), chacun configuré pour être guidé par chacun de la pluralité de cylindres (14) afin d'effectuer un mouvement de va-et-vient par rapport à la rotation de l'arbre de rotation (12) et une enveloppe (18) pour loger les cylindres (14) et les pistons (16), le procédé de diagnostic étant **caractérisé en ce qu'**il comprend :
une étape de détection de vibration pour détecter la vibration de l'enveloppe (18) par un capteur de vibration (2) disposé sur l'enveloppe (18) tout en faisant tourner l'arbre de rotation (12) dans un état non chargé de la machine hydraulique (10) ; et
une étape de détermination pour déterminer, sur la base d'un résultat de détection détecté par le capteur de vibration (12), si un phénomène de saut de piston qui est accompagné par la collision et la séparation d'au moins l'un des pistons (16) par rapport à un côté de l'arbre de rotation (12), s'est produit,
dans lequel le capteur de vibration (2) est au moins un accéléromètre (3) monté sur l'enveloppe (18),
dans lequel, à l'étape de détection de vibration, une forme d'onde qui indique le changement temporel d'accélération de l'enveloppe (18), est obtenue par le au moins un accéléromètre (3), et
dans lequel, à l'étape de détermination, le phénomène de saut de piston est déterminé comme s'étant produit si un rapport de pic sur moyenne quadratique d'un pic compris dans la forme d'onde est au moins une valeur de seuil prédéterminée.

2. Procédé de diagnostic pour une machine hydraulique (10) selon la revendication 1, comprenant en outre :
une étape de détermination de piston anormal pour déterminer un piston anormal où le phénomène de saut de piston s'est produit,
dans lequel, à l'étape de détermination de piston anormal, un piston (16) qui a atteint un point mort bas à un moment où le pic indiquant l'occurrence du phénomène de saut de piston est apparu, est déterminé comme étant le piston anormal.

3. Procédé de diagnostic pour une machine hydraulique (10) selon la revendication 2, comprenant en outre :
une étape d'acquisition de données pour acquérir des données qui indiquent le changement temporel d'un angle de rotation de l'arbre de rotation (12),
dans lequel, à l'étape de détermination de piston anormal, le piston (16) qui a atteint le point mort bas est déterminé à partir des données indiquant le changement temporel de l'angle de rotation de l'arbre de rotation (12) acquis à l'étape d'acquisition de données.

4. Procédé de diagnostic pour une machine hydraulique (10) selon l'une quelconque des revendications 1 à 3,
dans lequel la machine hydraulique (10) est un moteur hydraulique (26) d'une transmission hydraulique (30) qui comprend :
une pompe hydraulique (24) qui est configurée pour être entraînée par énergie mécanique introduite dans l'arbre de rotation (22) ; et
le moteur hydraulique (26) qui est configuré pour être entraîné par de l'huile sous pression provenant de la pompe hydraulique (24).

5. Procédé de diagnostic pour une machine hydraulique (10) selon la revendication 4,
dans lequel la transmission hydraulique (30) est une partie de transmission de puissance d'un appareil de génération d'énergie renouvelable (36) qui comprend :
au moins une aube (32) ;
un arbre de rotation (22) configuré pour tourner grâce à l'énergie renouvelable reçue par la au moins une aube (32) ;
la partie de transmission de puissance (31), dans laquelle l'énergie de rotation de l'arbre de rotation (22) est introduite, et
un générateur (34) configuré pour être entraîné par l'énergie de rotation introduite via la partie de transmission de puissance (31).

6. Procédé de diagnostic selon l'une quelconque des revendications 1 à 5, dans lequel l'arbre de rotation (12) est supporté sur l'enveloppe (18) via un palier (19).

7. Appareil de diagnostic (1) pour une machine hydraulique (10) comprenant un arbre de rotation (12), une pluralité de cylindres (14), une pluralité de pistons (16), dont chacun est configuré pour être guidé par chacun de la pluralité de cylindres (14) afin d'effectuer un mouvement de va-et-vient par rapport à la rotation de l'arbre de rotation (12) et une enveloppe (18) pour loger les cylindres (14) et les pistons (16), l'appareil de diagnostic (1) étant **caractérisé en ce qu'**il comprend :
un capteur de vibration (2) qui est disposé sur l'enveloppe (18) et configuré pour détecter la vibration de l'enveloppe (18) qui se produit pendant la rotation de l'arbre de rotation (12) dans un état non chargé de la machine hydraulique (10) ; et
une partie de détermination (6) configurée pour déterminer, sur la base d'un résultat de détection détecté par le capteur de vibration (2), si un phénomène de saut de piston accompagné par la collision et la séparation d'au moins l'un des pistons (16) par rapport à un côté de l'arbre de rotation (12) s'est produit,
dans lequel le capteur de vibration (2) est au moins un accéléromètre (3) qui est monté sur l'enveloppe (18) et configuré pour obtenir une forme d'onde qui indique le changement temporel d'accélération de l'enveloppe (18), et
dans lequel la partie de détermination (6) est configurée pour déterminer que le phénomène de saut de piston s'est produit si un rapport de pic sur moyenne quadratique d'un pic compris dans la forme d'onde est au moins une valeur de seuil prédéterminée.

8. Appareil de diagnostic (1) pour une machine hydraulique (10) selon la revendication 7, comprenant en outre :
une partie de détermination de piston anormal (8) configurée pour déterminer un piston anormal où le phénomène de saut de piston s'est produit,
dans lequel la partie de détermination de piston anormal (8) est configurée pour déterminer un piston (16) qui a atteint un point mort bas à un moment où le pic indiquant l'occurrence du phénomène de saut de piston est apparu, en tant que piston anormal.

9. Appareil de diagnostic (1) pour une machine hydraulique (10) selon la revendication 8,
dans lequel la partie de détermination de piston anormal est configurée pour déterminer le piston (16) ayant atteint le point mort bas au moment où le pic indiquant l'occurrence du phénomène de saut de piston est apparu à partir des données indiquant le changement temporel d'un angle de rotation de l'arbre de rotation (12).
